# EUROPÄISCHE PATENTSCHRIFT

(11) **EP 1 584 003 B1**
(45) Veröffentlichungstag und Bekanntmachung des Hinweises auf die Patenterteilung: **04.06.2008**
(21) Anmeldenummer: 03767456.1
(22) Anmeldetag: 26.11.2003
(51) Int. Cl.: G05F 1/571, H02H 9/00

(54) **SPANNUNGSVERSORGUNGSSCHALTUNG SOWIE KOMMUNIKATIONSANLAGE MIT SPANNUNGSVERSORGUNGSSCHALTUNG**
POWER SUPPLY CIRCUIT IN ADDITION TO COMMUNICATIONS EQUIPMENT COMPRISING A POWER SUPPLY CIRCUIT
CIRCUIT D'ALIMENTATION EN TENSION ET SYSTEME DE COMMUNICATION A CIRCUIT D'ALIMENTATION EN TENSION

(30) Priorität: 17.01.2003 DE 10301673
(43) Veröffentlichungstag der Anmeldung: 12.10.2005
(73) Patentinhaber: Siemens Enterprise Communications GmbH & Co. KG, 81379 München (DE)
(72) Erfinder: KRUG, Wilfried, 58452 Witten (DE)
(86) Internationale Anmeldenummer: PCT/DE2003/003913
(87) Internationale Veröffentlichungsnummer: WO 2004/068253

(56) Entgegenhaltungen:
- EP-A- 0 410 423
- EP-A- 0 545 042
- DE-A- 10 049 994
- US-A- 3 740 569

## Beschreibung

Elektrische Anlagen, wie z.B. Kommunikationsanlagen oder Personalcomputer, weisen häufig eine Vielzahl von Baugruppen und/oder Schnittstellen auf, die unterschiedliche Versorgungsspannungen benötigen. In einer typischen Kommunikationsanlage werden beispielsweise Versorgungsspannungen von -24V, +36V, +5V, +3, 3V und +1,8V benötigt.

Aus Gründen der Produktsicherheit dürfen an externen Schnittstellen, wie z.B. USB (Universal Serial Bus), V.24 oder Ethernet anliegende Spannungen eine durch den sogenannten SELV-Standard (Safety Extra Low Voltage) vorgegebene Maximalspannung nicht überschreiten. Der SELV-Standard ist in der Norm IEC 60950 der International Electrotechnical Commission definiert und schreibt für Gleichstrom eine zulässige Maximalspannung von 60V vor. Gleichspannungen über 60V werden als gefährliche Spannungen eingestuft.

Viele Kommunikationsanlagen enthalten Baugruppen, z.B. analoge Teilnehmerschnittstellen, deren Versorgungsspannung im Grenzbereich der gemäß SELV-Standard zulässigen Spannungen liegt. Falls sich zu einer solchen gerade noch zulässigen Versorgungsspannung, z.B. im Fehlerfall, eine Spannung einer anderen Baugruppe oder Schnittstelle addiert, kann die zulässige Maximalspannung überschritten werden. Dieses Problem kann insbesondere in elektrischen Anlagen mit einer Vielzahl von Versorgungsspannungen und besonders in Kommunikationsanlagen mit analogen Teilnehmerschnittstellen auftreten.

Gemäß dem bisherigen Stand der Technik kann die Einhaltung des SELV-Standards durch eine sogenannte Basisisolation gemäß der Norm IEC 60950 gewährleistet werden, bei der Stromkreise mit unterschiedlichen Betriebsspannungen verhältnismäßig aufwendig voneinander zu isolieren sind. Alternativ oder zusätzlich kann eine Fehlersimulation durchgeführt werden, mit der nachzuweisen ist, dass der SELV-Standard auch im Falle eines einfachen Fehlers eingehalten wird. Während eine Basisisolation einen verhältnismäßig hohen Bauteileaufwand erfordert, ist der Aufwand einer Fehlersimulation im erheblichen Maße davon abhängig, wie groß oder komplex diejenigen Schaltungsbereiche sind, in denen potentiell gefährliche Spannungen auftreten könnten. Sowohl für eine Basisisolation als auch für eine Fehlersimulation erhöht sich der erforderliche Aufwand insbesondere dann beträchtlich, wenn - wie häufig notwendig - Betriebsspannungen für eine Baugruppe über Leiterplatten einer anderen Baugruppe zu führen sind.

Aus der Offenlegungsschrift DE 100 49 994 A1 ist eine Anordnung zur Überwachung mehrerer Versorgungsspannungen bekannt, bei der die Versorgungsspannungen verringert werden, wenn eine der Versorgungsspannungen einen vorgegebenen Toleranzwert überschreitet. Dies erfordert jedoch eine separate Überwachung aller Versorgungsspannungen.

Weiterhin ist aus der Druckschrift EP 545 042 A1 eine Batterie mit mehreren Spannungsausgängen bekannt, bei der mindestens einer der Spannungsausgänge unterbrochen wird, wenn bei einem der Spannungsausgänge eine Fehlerbedingung auftritt. Auch hierbei ist eine separate Überwachung aller Spannungsausgänge erforderlich.

Weitere Spannungsversorgungssysteme für mehrere separat zu regelnde und überwachende Ausgangsspannungen sind ferner aus den Druckschriften US 3 740 569 und EP 410 423 A2 bekannt.

Es ist Aufgabe der vorliegenden Erfindung, eine weniger aufwendige Spannungsversorgungsschaltung zur Spannungsversorgung verschiedener Baugruppen und/oder Schnittstellen einer elektrischen Anlage unter Einhaltung einer vorgegebenen Maximalspannung an allen Schnittstellen anzugeben. Es ist weiterhin Aufgabe der Erfindung eine Kommunikationsanlage mit einer solchen Spannungsversorgungsschaltung anzugeben.

Gelöst wird diese Aufgabe durch eine Spannungsversorgungsschaltung mit den Merkmalen des Patentanspruchs 1 sowie durch eine Kommunikationsanlage mit den Merkmalen des Patentanspruchs 4.

Die erfindungsgemäße Spannungsversorgungsschaltung weist mehrere Spannungsversorgungsbausteine zur Spannungsversorgung verschiedener Baugruppen und/oder Schnittstellen einer elektrischen Anlage, z.B. einer Kommunikationsanlage oder eines Personalcomputers, sowie eine Regelschaltung zur Regelung eines ersten der Spannungsversorgungsbausteine auf. Eine Schnittstelle kann hierbei z.B. eine USB- , V.24- oder Ethernet-Schnittstelle sowie eine analoge Teilnehmerschnittstelle oder eine SELV-Spannungsversorgungsschnittstelle sein. Die Regelschaltung ist mit denjenigen Spannungsversorgungsausgängen verschiedener Spannungsversorgungsbausteine verbunden, zwischen denen im Betrieb eine maximale Spannungsdifferenz auftritt. Die Regelschaltung ist zur Verwendung der maximalen Spannungsdifferenz als einziger Regelgröße so eingerichtet, dass abhängig von einer Abweichung der maximalen Spannungsdifferenz von einem Referenzwert nur der erste Spannungsversorgungsbaustein so nachgeregelt wird, dass die Abweichung verringert wird.

Im Spannungsbereich derjenigen Spannungsversorgungsausgänge, zwischen denen im Betrieb die maximale Spannungsdifferenz auftritt, liegen naturgemäß die Ausgangsspannungen aller anderen der Spannungsversorgungsbausteine. Durch Regelung der maximalen Spannungsdifferenz kann somit im Allgemeinen garantiert werden, dass im Versorgungsbereich aller Spannungsversorgungsbausteine auch im Fehlerfall, z.B. bei einem Kurzschluss, keine höheren Spannungsdifferenzen auftreten. Eine gesondert zu betrachtende Ausnahme bilden nur solche Schaltungsbereiche, in denen durch einen Spannungswandler aus ei ner Versorgungsspannung eine weitere Spannung erzeugt wird, durch die die maximale Spannungsdifferenz überschritten werden könnte. Ein Beispiel für eine derartige Spannungserzeugung ist die Erzeugung eines Rufsignals an einer analogen Teilnehmerschnittstelle. Derartige gesondert zu betrachtende, kritische Schaltungsbereiche sind jedoch in der Regel verhältnismäßig klein und üblicherweise bereits ausreichend gegenüber allen anderen Schaltungsbereichen isoliert. Zur Absicherung der gesamten elektrischen Anlage genügt es meist, eine Fehlersimulation nur für den kritischen Schaltungsbereich durchzuführen, was erheblich weniger aufwendig ist als eine Fehlersimulation für den gesamten Bereich der elektrischen Anlage.

Durch Verwendung einer erfindungsgemäßen Spannungsversorgungsschaltung können mit unterschiedlichen Versorgungsspannungen zu versorgende Baugruppen und Schnittstellen innerhalb der elektrischen Anlage räumlich frei konfiguriert werden. Insbesondere können Leiterbahnen oder Leitungen zur Spannungsversorgung von Baugruppen über andere Baugruppen geführt werden, ohne dass ein erhöhter Aufwand zur Absicherung der Schnittstellen gegen gefährliche Spannungen erforderlich wäre. Dies erhöht die Konstruktionsfreiheit bei der räumlichen Anordnung der Baugruppen und Schnittstellen beträchtlich.

Nach einer vorteilhaften Ausführungsform der Erfindung kann die Regelschaltung so eingerichtet sein, dass die maximale Spannungsdifferenz eine vorgegebene Maximalspannung, z.B. gemäß dem sogenannten SELV-Standard (Safety Extra Low Voltage) im Wesentlichen nicht überschreitet.

Weiterhin kann eine Notabschalteeinrichtung vorgesehen sein zum Abschalten der Spannungsversorgung bei Überschreiten einer, z.B. gemäß SELV-Standard vorgegebenen Maximalspannungdurch die maximale Spannungsdifferenz.

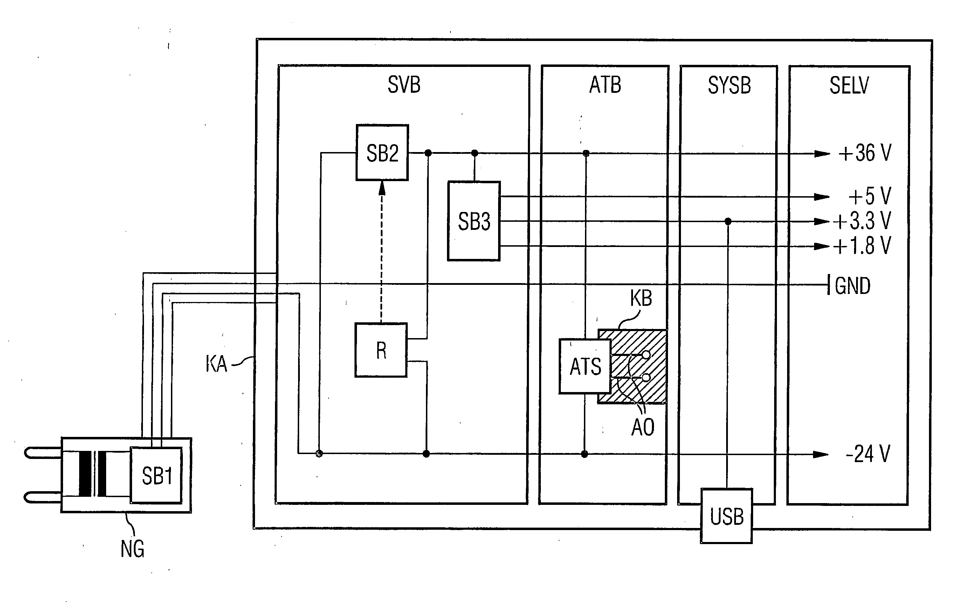

Ein Ausführungsbeispiel der Erfindung wird nachfolgend anhand der Figur näher erläutert.

Die Figur zeigt eine Kommunikationsanlage mit einer mehrere Spannungsversorgungsbausteine aufweisenden Spannungsversorgungsschaltung in schematischer Darstellung.

Die Figur zeigt eine Kommunikationsanlage KA, z.B. eine Nebenstellenanlage, die über ein Steckernetzgerät NG mit Strom versorgt wird, in schematischer Darstellung. Das Steckernetzgerät NG verfügt im vorliegenden Ausführungsbeispiel über einen Spannungsversorgungsbaustein SB1 mit einer Ausgangsspannung von -24V. Der Spannungsversorgungsbaustein SB1 ist über eine Masseleitung GND und einer -24V-Spannungsversorgungsleitung mit einer Spannungsversorgungsbaugruppe SVB der Kommunikationsanlage KA verbunden.

Die Spannungsversorgungsbaugruppe SVB enthält als Spannungsversorgungsbausteine Gleichspannungswandler SB2 und SB3. Der Gleichspannungswandler SB2 ist an die -24V-Spannungsversorgungsleitung angeschlossen und erzeugt aus -24V-Eingangsspannung eine Ausgangsspannung von +36V. Durch den Gleichstromspannungswandler SB2 wird eine +36V-Spannungsversorgungsleitung gespeist. Die Spannungsversorgungsbaugruppe SVB weist als weiteren Spannungsversorgungsbaustein einen mit der 36V-Spannungsversorgungsleitung verbundenen Gleichspannungswandler SB3 auf, der aus der Eingangsspannung von +36V Ausgangsspannungen von +5V, +3,3V und +1,8V erzeugt. Die Spannungsversorgungsausgänge des Gleichspannungswandlers SB3 speisen entsprechende +5V-, +3,3V- und +1,8V-Spannungsversorgungsleitungen. Eine jeweilige Masseverbindung der Gleichspannungswandler SB2 und SB3 ist in der Figur aus Übersichtlichkeitsgründen nicht dargestellt.

Die Spannungsversorgungsbaugruppe SVB weist weiterhin eine Regelschaltung R auf, die mit denjenigen Spannungsversorgungsausgängen der Spannungsversorgungsbausteine SB1, SB2 und SB3 verbunden ist, zwischen denen im Betrieb die größte Spannungsdifferenz der Spannungsversorgungsbaugruppe SVB auftritt. D.h. die Regelschaltung R ist mit der größten Versorgungsspannung, hier der positiven +36V-Spannung, sowie mit der kleinsten Versorgungsspannung, hier der negativen -24V-Spannung, verbunden. Die Spannungsdifferenz wird direkt oder zumindest möglichst nahe an den jeweiligen Spannungsversorgungsausgängen der betreffenden Spannungsversorgungsbausteine, hier SB1 und SB2, für die Regelschaltung R abgeleitet. Auf diese Weise soll erreicht werden, dass zwischen einem jeweiligen Spannungsversorgungsausgang und Regelschaltungseingang auch im Fehlerfall kein wesentlicher, eine Regelung beeinträchtigender Spannungsabfall auftritt.

Ein Stellgrößenausgang der Regelschaltung R ist - wie durch einen strichlierten Pfeil angedeutet - mit dem Spannungsversorgungsbaustein SB2 verbunden, um dessen Ausgangsspannung abhängig von der der Regelschaltung R zugeführten Spannungsdifferenz zu steuern bzw. nachzuregeln. Im vorliegenden Ausführungsbeispiel wird die Ausgangsspannung des Spannungsversorgungsbausteins SB2 durch die Regelschaltung R so nachgeregelt, dass die maximale in der Spannungsversorgungsbaugruppe SVB auftretende Spannungsdifferenz, d.h. die Differenz der Ausgangsspannungen von SB1 und SB2, möglichst nahe an ihrem Nennwert von 36V - (-24V) = 60V liegt, aber diesen im Wesentlichen nicht überschreitet. Das Überschreiten der Nennspannung von 60V wird dabei durch Gegensteuerung verhindert. Da die Nennspannung von 60V eine durch den SELV-Standard vorgegebene Maximalspannung ist, kann auf diese Weise die Einhaltung des SELV-Standards gewährleistet werden.

Die erfindungsgemäße Regelung ist gegenüber einer separaten Regelung der individuellen Ausgangsspannungen der Spannungsversorgungsbausteine SB1 und SB2 insofern vorteilhaft, als dass anstelle von zwei Regelgrößen nur eine Regelgröße, nämlich die im Hinblick auf den SELV-Standard wesentliche maximale Spannungsdifferenz zu regeln ist. Die Verwendung der maximalen Spannungsdifferenz als einziger Regelgröße erlaubt darüber hinaus eine größere Regelungstoleranz als separate Regelungen der individuellen Ausgangsspannungen, da deren Regelfehler sich im Allgemeinen aufsummieren. Dies gilt insbesondere in Fällen, bei denen die Versorgungsspannungen, wie z.B. bei Steckernetzteilen, verhältnismäßig großen Spannungsschwankungen unterworfen sind. Durch die größere Regelungstoleranz kann der Aufwand für die Regelungsschaltung verringert werden.

Im vorliegenden Ausführungsbeispiel wird nur der Spannungsversorgungsbaustein SB2 durch die Regelschaltung R abhängig von der maximalen Spannungsdifferenz nachgeregelt. Nach einer Ausführungsvariante könnten aber auch noch ein oder mehrere weitere Spannungsversorgungsbausteine, hier SB1 und/oder SB3, abhängig von der maximalen Spannungsdifferenz geregelt werden. Zur Erhöhung der Regelgenauigkeit sollte vorzugsweise der Spannungsversorgungsbaustein mit dem größten Ausgangsspannungsbetrag, hier SB2 mit einem Ausgangsspannungsbetrag von 36V, durch die Regelschaltung R nachgeregelt werden.

Durch die Spannungsversorgungsbaugruppe SVB werden eine Teilnehmerbaugruppe ATB mit einer analogen Teilnehmerschnittstelle ATS, eine Systembaugruppe SYSB mit einer USB-Schnittstelle USB sowie eine interne, dem SELV-Standard genügende Spannungsversorgungsschnittstelle SELV versorgt. Durch Anschluss an die interne Spannungsversorgungsschnittstelle SELV können weitere Baugruppen und/oder Schnittstellen (nicht dargestellt) der Kommunikationsanlage KA mit Strom versorgt werden.

Die Spannungsversorgungsleitungen für +36V, +5V, +3,3V, +1,8V und -24V sowie die Masseleitung GND werden von der Spannungsversorgungsbaugruppe SVB über die Teilnehmerbaugruppe ATB und die Systembaugruppe SYSB zur Spannungsversorgungsschnittstelle SELV geführt; und zwar unabhängig davon, ob eine jeweilige Versorgungsspannung von der betreffenden Baugruppe ATB bzw. SYSB benötigt wird oder nicht. Im vorliegenden Ausführungsbeispiel wird in der Systembaugruppe SYSB nur die +3,3V-Versorgungsspannung zur Versorgung der USB-Schnittstelle USB benötigt. In der Teilnehmerbaugruppe ATB werden dagegen der analogen Teilnehmerschnittstelle ATS die -24V-Versorgungsspannung sowie die +36V-Versorgungsspannung zugeführt. Insgesamt wird die analoge Teilnehmerschnittstelle ATS also mit einer Versorgungsspannungsdifferenz von 60V betrieben, die im Grenzbereich der gemäß SELV-Standard zulässigen Spannungen liegt.

Die analoge Teilnehmerschnittstelle ATS dient zum Anschluss analoger Endgeräte, wie z.B. analoger Telefone, Faxgeräte, Anrufbeantworter oder analoger Modems. Sie erzeugt durch einen internen Spannungswandler (nicht dargestellt) eine hohe, in der Regel außerhalb des gemäß SELV-Standards zulässigen Bereichs befindliche Versorgungsspannung als Rufsignal. Je höher die Spannung des Rufsignals ist, desto länger kann eine jeweilige Leitung sein, über die ein analoges Endgerät noch angesteuert werden kann. Da die Spannung des Rufsignals aus der Versorgungsspannungsdifferenz der analogen Teilnehmerschnittstelle ATS abgeleitet wird, sollte diese Versorgungsspannungsdifferenz möglichst hoch sein, um möglichst lange Endgeräteleitungen zu ermöglichen. Durch die erfindungsgemäße Spannungsversorgungsschaltung kann die analoge Teilnehmerschnittstelle ATS einerseits mit einer sehr hohen Versorgungsspannungsdifferenz von 60V oder nahezu 60V versorgt werden, die andererseits aber die gemäß SELV-Standard zulässige Maximalspannung im Wesentlichen nicht überschreitet.

Durch die Regelung der maximalen Versorgungsspannungsdifferenz können auch hohe Versorgungsspannungen im Grenzbereich der SELV-Spannungen durch die ganze Kommunikationsanlage und über beliebige Baugruppen unter Einhaltung des SELV-Standards transportiert werden. Aufgrund der Regelung auf maximal 60V zwischen größter und kleinster Versorgungsspannung sind die durch die Spannungsversorgungsbaugruppe SVB versorgten Baugruppen und Schnittstellen, hier ATB, SYSB, USB und SELV, im gemäß SELV-Standard zulässigen Spannungsbereich. Als einziger Schaltungsbereich, in dem Spannungen außerhalb des gemäß SELV-Standard zulässigen Spannungsbereichs auftreten können, ist ein kritischer Schaltungsbereich KB um Analogausgänge AO der analogen Teilnehmerschnittstelle ATS zu betrachten. An den Analogausgängen AO wird das die SELV-Maximalspannung überschreitende Rufsignal an angeschlossene analoge Endgeräte ausgegeben. Der kritische Schaltungsbereich KB ist in der Figur durch Schraffur veranschaulicht. Da im vorliegenden Ausführungsbeispiel nur im kritischen Bereich KB um die Analogausgänge AO gefährliche Spannungen im Sinne des SELV-Standards auftreten können, ist zur Einhaltung des SELV-Standards nur für diesen kritischen Schaltungsbereich KB eine Fehlersimulation und/oder eine Basisisolation erforderlich. Der durch Fehlersimulation zu prüfende Bereich ist somit erheblich eingeschränkt, wodurch die Anzahl der zu betrachtenden Testfälle und damit das Designrisiko sinken. Alle anderen Schaltungsbereiche, Baugruppen und Schnittstellen der Kommunikationsanlage sind unter Einhaltung des SELV-Standards räumlich frei konfigurierbar.

## Patentansprüche

1. Spannungsversorgungsschaltung mit mehreren Spannungsversorgungsbausteinen (SB1, SB2, SB3) zur Spannungsversorgung verschiedener Baugruppen (ATB, SYSB) und/oder Schnittstellen (ATS, USB, SELV) einer elektrischen Anlage (KA), mit
einer Regelschaltung (R) zur Regelung eines ersten (SB2) der Spannungsversorgungsbausteine, wobei die Regelschaltung (R) mit denjenigen Spannungsversorgungsausgängen verschiedener der Spannungsversorgungsbausteine (SB1, SB2) verbunden ist, zwischen denen im Betrieb eine maximale Spannungsdifferenz auftritt,
**dadurch gekennzeichnet,**
**dass** die Regelschaltung (R) zur Verwendung der maximalen Spannungsdifferenz als einziger Regelgröße so eingerichtet ist, dass abhängig von einer Abweichung der maximalen Spannungsdifferenz von einem Referenzwert nur der erste Spannungsversorgungsbaustein (SB2) so nachgeregelt wird, dass die Abweichung verringert wird.

2. Spannungsversorgungsschaltung nach Anspruch 1,
**dadurch gekennzeichnet,**
**dass** die Regelschaltung (R) so eingerichtet ist, dass die maximale Spannungsdifferenz eine vorgegebene Maximalspannung nicht überschreitet.

3. Spannungsversorgungsschaltung nach einem der vorhergehenden Ansprüche,
**gekennzeichnet durch**
eine Notabschalteeinrichtung zum Abschalten der Spannungsversorgung bei Überschreiten einer vorgegebenen Maximalspannung **durch** die maximale Spannungsdifferenz.

4. Kommunikationsanlage (KA) mit einer Spannungsversorgungsschaltung nach einem der vorhergehenden Ansprüche zur Spannungsversorgung verschiedener Baugruppen (ATB, SYSB) und/oder Schnittstellen (ATS, USB, SELV) der Kommunikationsanlage (KA).

5. Kommunikationsanlage nach Anspruch 4,
**dadurch gekennzeichnet,**
**dass** eine der Schnittstellen ein analoger Teilnehmeranschluss (ATS) ist.

6. Kommunikationsanlage nach Anspruch 4 oder 5,
**dadurch gekennzeichnet,**
**dass** eine der Schnittstellen eine SELV-Spannungsversorgungsschnittstelle (SELV) ist.

## Claims

1. Power supply circuit with a plurality of power supply components (SB1, SB2, SB3) for supplying voltage to different modules (ATB, SYSB) and/or interfaces (ATS, USB, SELV) of an electrical system (KA), having
a regulating circuit (R) for regulating a first (SB2) of the power supply components, wherein
said regulating circuit (R) is connected to those power supply outputs of different power supply components (SB1, SB2) between which a maximum voltage difference occurs during operation,
**characterised in that**
the regulating circuit (R) is set up in such a way for the purpose of using the maximum voltage difference as the only controlled variable that as a function of a deviation of the maximum voltage difference from a reference value, only the first power supply component (SB2) will be adjusted such that the deviation will be reduced.

2. Power supply circuit according to claim 1, **characterised in that**
the regulating circuit (R) is set up in such a way that the maximum voltage difference does not exceed a specified maximum voltage.

3. Power supply circuit according to one of the preceding claims,
**characterised by**
an emergency shutdown device for shutting down the power supply if a specified maximum voltage is exceeded by the maximum voltage difference.

4. Communication system (KA) having a power supply circuit according to one of the preceding claims for supplying voltage to different modules (ATB, SYSB) and/or interfaces (ATS, USB, SELV) of the communication system (KA).

5. Communication system according to claim 4,
**characterised in that**
one of the interfaces is an analogue subscriber line (ATS).

6. Communication system according to claim 4 or 5, **characterised in that**
one of the interfaces is a SELV power supply interface (SELV).

## Revendications

1. Circuit d'alimentation en tension comprenant plusieurs modules d'alimentation en tension (SB1, SB2, SB3) pour l'alimentation en tension de divers sous-ensembles (ATB, SYSB) et/ou interfaces (ATS, USB, SELV) d'une installation électrique (KA), comprenant
un circuit de réglage (R) pour le réglage d'un premier (SB2) des modules d'alimentation en tension, le circuit de réglage (R) étant relié aux sorties d'alimentation en tension de différents modules d'alimentation en tension (SB1, SB2), entre lesquelles une différence de tension maximale apparaît pendant le service,
**caractérisé en ce que**
le circuit de réglage (R) est aménagé pour l'utilisation de la différence de tension maximale comme unique grandeur de réglage de telle sorte que, en fonction d'un écart entre la différence de tension maximale et une valeur de référence, seul le premier module d'alimentation en tension (SB2) est réajusté de telle sorte que l'écart est réduit.

2. Circuit d'alimentation en tension selon la revendication 1,
**caractérisé en ce que**
le circuit de réglage (R) est aménagé de telle sorte que la différence de tension maximale ne dépasse pas une tension maximale prédéfinie.

3. Circuit d'alimentation en tension selon l'une quelconque des revendications précédentes,
**caractérisé par**
un dispositif d'arrêt d'urgence pour l'arrêt de l'alimentation en tension en cas de dépassement d'une tension maximale prédéfinie par la différence de tension maximale.

4. Installation de communication (KA) comprenant un circuit d'alimentation en tension selon l'une quelconque des revendications précédentes pour l'alimentation en tension de divers ensembles (ATB, SYSB) et/ou de diverses interfaces (ATS, USB, SELV) de l'installation de communication (KA).

5. Installation de communication selon la revendication 4,
**caractérisé en ce que**
une des interfaces est un raccordement d'abonné analogique (ATS).

6. Installation de communication selon la revendication 4 ou 5,
**caractérisé en ce que**
une des interfaces est une interface d'alimentation en tension de SELV (SELV).
